Europäisches Patentamt

European Patent Office

Office européen des brevets

(11) Publication number: **0 429 057 A1**

(12) **EUROPEAN PATENT APPLICATION**

(21) Application number: 90122169.7

(22) Date of filing: 20.11.90

(51) Int. Cl.5: **G10L 5/04**, G06F 3/16

(30) Priority: 20.11.89 US 439240

(43) Date of publication of application:
29.05.91 Bulletin 91/22

(84) Designated Contracting States:
DE FR GB IT

(71) Applicant: **DIGITAL EQUIPMENT CORPORATION**
**111 Powdermill Road**
**Maynard Massachusetts 01754-1418(US)**

(72) Inventor: **Gili, Patrick R.**
**84-124 55 Villa Road**
**Greenville, South Carolina 29615(US)**
Inventor: **Vitale, Anthony J.**
**22 St. James Drive**
**Northboro, Massachusetts 01532(US)**

(74) Representative: **Betten & Resch**
**Reichenbachstrasse 19**
**W-8000 München 5(DE)**

(54) **Text-to-speech system having a lexicon residing on the host processor.**

(57) A text-to-speech system is provided having a host system operable to perform a text-to-speech application program. The host system includes a memory storing the lexicon for a separate text-to-speech device. By using the host system to contain the lexicon, a sufficient amount of memory is made available. Therefore, a very complex lexicon can be provided and more information made available to the voice synthesizer on the text-to-speech device. This partitioning of the text-to-speech system between the host system and the text-to-speech device allows the computation-intensive processes to be performed on the text-to-speech device while providing a large memory to contain the lexicon information.

Figure 3

# TEXT-TO-SPEECH SYSTEM HAVING A LEXICON RESIDING ON THE HOST PROCESSOR

## Field of the Invention

This invention relates to text-to-speech systems and, more particularly, to the partitioning of a text-to-speech device in such a manner to allow the lexicon to reside on the host processor executing the text-to-speech application.

## Background of tho Invention

Text-to-speech systems have proved useful wherever information can be conveyed as effectively by voice as by vision. However, extensive speech needs to be of a higher quality than the robot-like voices adequate for simple messages. Improved intelligibility and naturalness demand additional sets of linguistic principles and levels of detail, which in turn require far greater hardware and software capability than does low quality speech synthesis.

Prior known text-to-speech systems make use of a "lexicon" incorporated into the text-to-speech device. The "lexicon" is a dictionary or database containing a code representative of the sequence of graphemes (spelled letters) and their phonemic equivalent constituting the corresponding spoken word. These systems operate by converting text into its phonemic form in part through the use of the lexicon. Approximately 40 phonemic symbols are required to represent all the functional sounds of the English language.

Various text-to-speech systems including a lexicon are described in U.S. Patent Nos. 4,692,941, 4,278,838, 3,704,345 and the article entitled "Three-tiered Software and VLSI Aid Developmental System To Read Text Aloud," Electronics, April 21, 1983.

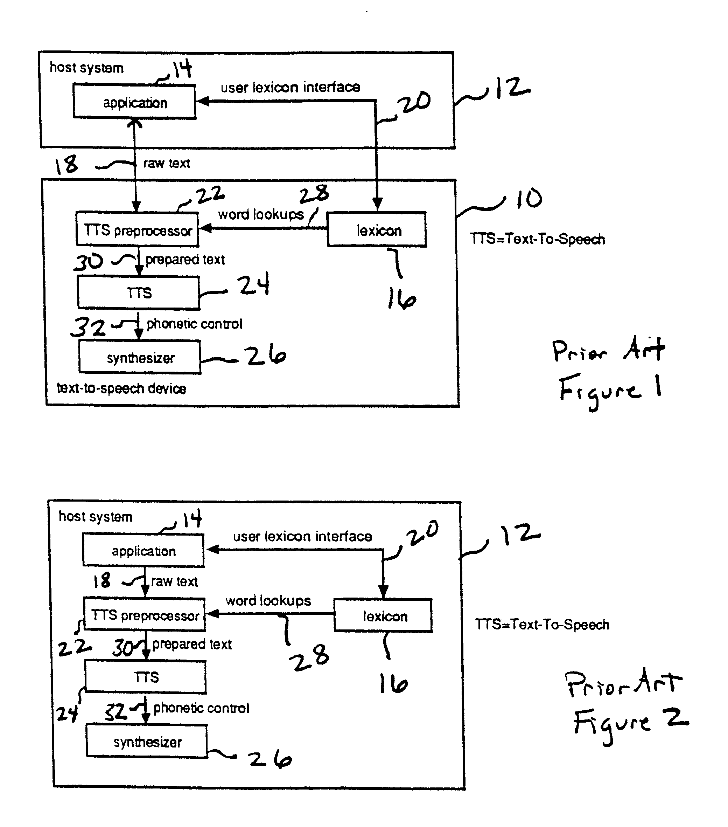

One such system is shown in prior art Figure 1. A text-to-speech device 10 is shown having a lexicon 16 residing on the text to speech device 10. The application 14, which runs the text-to-speech device 10, operates on a host system 12. A bidirectional command/status flow line 18 provides the "raw" text stream from the application 14 to the text-to-speech (TTS) preprocessor 22 in the text-to-speech device 10. The bidirectional nature of line 18 further allows status information to be returned to the application 14. The lexicon 16 is shown coupled to the TTS preprocessor 22 via bidirectional word look-up line 28. The lexicon 16 is also coupled to the application 14 by the bidirectional user lexicon interface line 20. The user lexicon interface line 20 operates as a user interface to the lexicon 16, e.g., operations to the lexicon 16 such as add, delete, modify, list, etc. may be performed through the user lexicon interface line 20.

The TTS preprocessor functions to preprocess the raw text supplied on line 18. Because numbers, sentence end points, and non-spoken characters such as apostrophes and virgules are a particularly difficult but necessary task in text-to-speech conversion, they are identified by the TTS preprocessor 22 before the lexicon 16 is searched.

The result of the TTS preprocessing 22 provides a prepared text output representing the raw text on line 30 to the text-to-speech processor 24. The text-to-speech processor 24 provides phonetic control data on line 32 to the voice synthesizer 26. These phonetic control data include rules for allophonic recoding, intonation, duration, target selection, phonemic smoothing, parameter calculation and similar functions. The voice synthesizer 26 incorporates a digital signal processor to provide a synthesized voice.

To achieve more natural high quality voice, the text-to-speech system must have a large lexicon. The larger the lexicon, the greater the probability that the pronunciation of a particular word will be exactly specified by the dictionary.

A major problem with the prior art Figure 1 text-to-speech system is that the architecture requires the text-to-speech device to provide a large memory which can adequately contain the lexical information. This requirement dramatically increases the cost and complexity of the text-to-speech device 10.

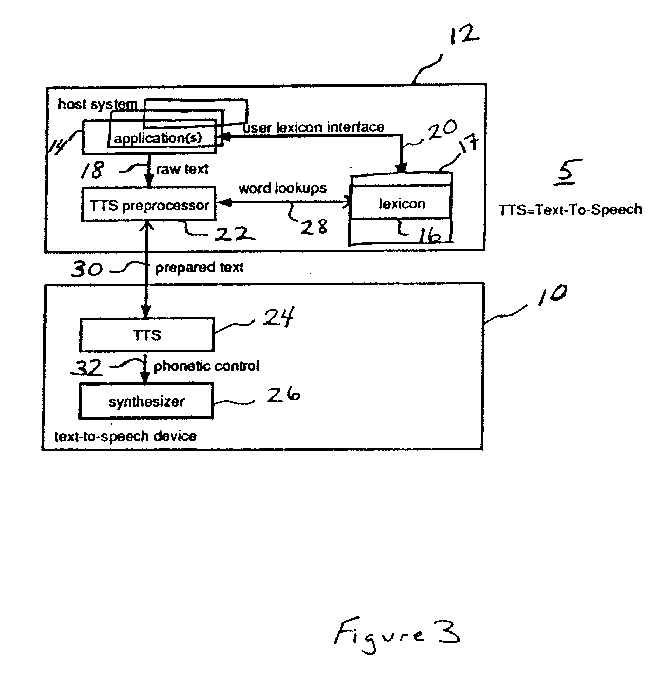

Another known process for performing text-to-speech synthesis is shown in prior art Figure 2. The entire text-to-speech process is shown modeled in software on the host system 12. By placing the entire text-to-speech process on the same host system 12 executing the application 14, the lexicon 16 can occupy the host system's memory. While the memory size and cost are minimal in the system of prior art Figure 2, the architecture requires a considerable amount of computing power which a typical host system 12, e.g., a VAX-VMS system or an IBM PC, cannot afford. This is because the TTS processor 24 and synthesizer 26 are very computational intensive processes. The digital signal processing performed by the synthesizer 26 along requires a sufficiently large amount of computation ower to make a general purpose host system architecture 12 inefficient for any other purposes apart from text-to-speech processing. A system of this type in which the entire text to speech process resides on the host is described in "Conversion of Unrestricted English Text To Speech", Massachusetts Institute of Technology, 1979.

There is thus a need to provide a text-to-speech system allowing for a large lexicon without significantly impacting the cost or the computational power of the system. Increasing the size and complexity of the lexicon is necessary to advance the technology of speech synthesis. The more complex the lexicon, the more information available for the text-to-speech device to operate on to provide a more natural sounding synthesized voice.

## Summary of the Invention

The present invention overcomes these problems by partitioning or adding to the text-to-speech architecture in such a manner to allow the lexicon to reside on the same host system which is executing the application. The remainder of the text-to-speech device is provided in dedicated hardware which aids the host system in performing the text-to-speech process by removing the computationally intensive processes from the host system.

Repartitioning of the architecture moves the lexicon and the text-to-speech preprocessor onto the same host system executing the application which runs the text-to-speech device. The host system ensures that a sufficient amount of memory is available for the lexicon. The size of the lexicon, for all practical purposes, is unlimited when using the host system memory. Therefore, a very complex lexicon can be provided and more information made available to the text-to-speech device. For example, a lexicon may be allowed to further contain additional information about each entry such as form class, i.e., part of speech, semantic features, i.e., its meaning, and any other data pertinent to the calculation of acoustic parameters which help to define naturalness and high quality speech. Partitioning the text-to-speech process further allows the computation intensive processes, e.g., TTS processor and voice synthesizer, to be accomplished in specialized hardware on the text-to-speech device.

Another embodiment of the present invention makes use of a lookup processor on the host system for performing word look-ups on the host-based lexicon. By providing the look-up processor on the host system, the TTS preprocessing functions can be performed on the dedicated text-to-speech device rather than in the host system. This embodiment produces additional traffic on the bus coupling the host system and the text-to-speech device but, if the bus bandwidth is not a constraining factor, the embodiment can reduce the amount of computation required of the host system by removing the lexicon look up and maintenance functions.

A further embodiment partitions the text-to-speech architecture into three components: a host system (which executes the application), the text-to-speech device, and a "lexicon server". By partitioning the text-to-speech architecture into three components, each of the components can be made a part of a local area network. This allows for the sharing of network "components" and, specifically allows a single lexicon server to be shared by multiple host systems supporting text-to-speech devices.

## Brief Description of the Drawings

Figure 1 is a block diagram illustrating a first prior art textto-speech process and architecture as described above.

Figure 2 is a block diagram illustrating a second prior art text-to-speech process and architecture as described above.

Figure 3 is a functional block diagram of a first embodiment of the text-to-speech architecture of the present invention.

Figure 4 is a functional block diagram illustrating a second embodiment of the present invention.

Figure 5 is a functional block diagram of a third embodiment of the present invention.

## Detailed Description

Referring to Figure 3, there is shown a text-to-speech system 5 including a host system 12 and a text-to-speech device 10. The host system 12 includes the application(s) 14 for operating the text-to-speech system 5. Also included in the host system 12 are the text-to-speech preprocessor 22 and a memory 17. The memory 17 further contains the lexicon 16.

The lexicon 16 occupies the host 12 memory 17 to provide, for all practical purposes, an unlimited dictionary of information for the text-to-speech device 10. The application(s) 14 provides raw text over line 18 to the TTS preprocessor 22. The application(s) 14 further couples over bidirectional user lexicon interface lines 20 with the lexicon 16. The bidirectional line 20 allows the user to interface with the dictionary to perform specific maintenance functions such as add, delete, modify, list, etc. to the lexicon 16. The lexicon 16 is further coupled to the TTS preprocessor 22 over word look-up line 28. The TTS preprocessor 22 identifies particularly difficult or idiosyncratic language specific text-to-speech conversions such as for numbers, sentence end points, and non-spoken characters such as apostrophes and virgules. The preprocessor 22 provides prepared text in the form of phonemic representations of the text on line 30. The prepared text is sent to the text-to-speech device 10.

The text-to-speech device includes a TTS processor 24 and a voice synthesizer 26. Before the voice synthesizer 26 operates, the phonemic representations received from the TTS preprocessor 22 are modified by the TTS processor 24 on the basis of syntactic and semantic analysis. Whereas the TTS preprocessor 22 and lexicon 16 operating in the host system 12 are concerned primarily with individual words and the selection of the phonemes that determine their pronunciation, the TTS processor 24 is concerned with the effects of the surrounding phrase and sentence of the text.

The prepared text is received in the TTS processor 24 via line 30. The TTS processor 24 performs the syntactic analysis of the prepared text and outputs phonetic control information to the voice synthesizer 26 via line 32.

The voice synthesis is then performed in the synthesizer 26 through the use of digital signal processing. Both the TTS processor 24 and voice synthesizer 26 on the text-to-speech device 10 are computational intensive operations. Therefore, by partitioning from the host the computational-intensive portions of the text-to-speech process, an improved text-to-speech system is developed which can more closely approximate natural speech performance.

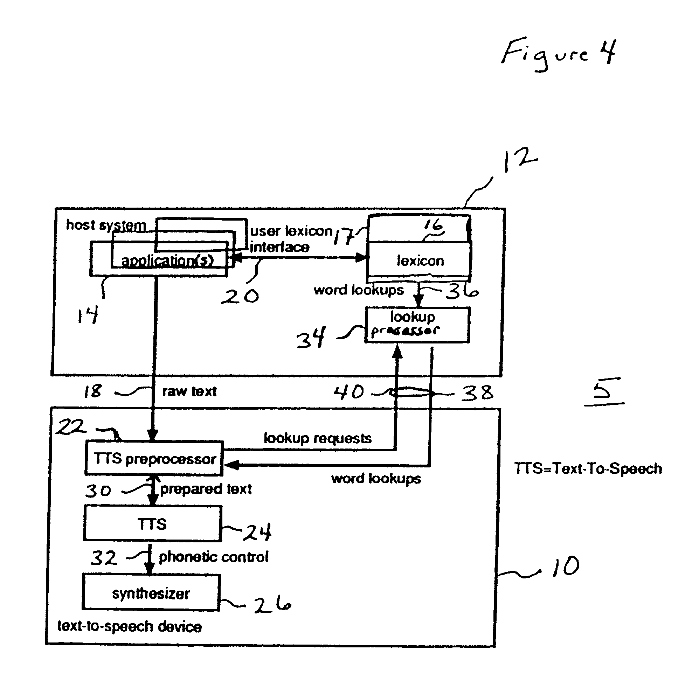

Figure 4 shows another embodiment of the text-to-speech system 5 of the present invention wherein like numerals designate like parts. In this embodiment, a look-up processor 34, which can be implemented in software or hardware, is provided in the host system 12 for interfacing with the lexicon 16 via word look-up line 36. Further, the TTS preprocessor 22 is now located on the text-to-speech device 10 rather than on the host system 12. The TTS preprocessor 22 couples with the look-up processor 34 and the host system 12 over a bus indicated generally by lines 40 and 38. It is understood that communication between the host system 12 and the text-to-speech device 10 can be achieved by any number of communication links, for example, the serial lines shown in the figures, the host systems I/O bus, or a local area network. The look-up processor 34 functions to receive the look-up requests over bus line 40 to look up a word in the lexicon 16. The word look-ups are then provided back to the TTS preprocessor 22 over bus line 38. The look-up processor 34 thus processes the requests and replies appropriately based on the results of the lexicon 16 search.

An advantage of this embodiment is to reduce the computations required to be performed by the host system 12 by removing the TTS preprocessor 22 from the host 12. This embodiment is particularly useful when the bus bandwidth between the host system 12 and text-to-speech device 10 is sufficient to enable the additional look-up requests and word look-up traffic on the bus over which the host system 12 and text-to-speech device 10 communicate.

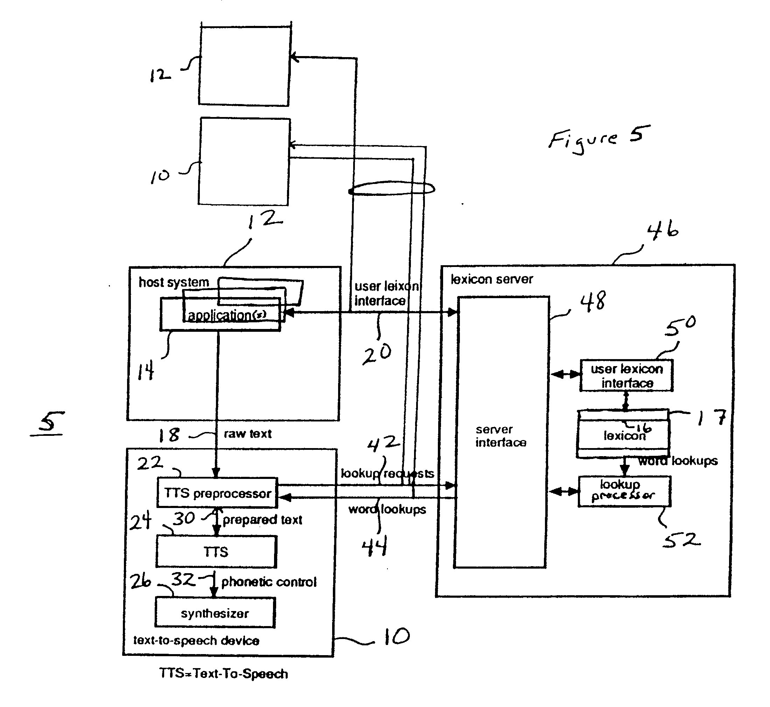

Figure 5 is a functional block diagram illustrating a third embodiment of the present invention. The text-to-speech system 5 is shown having three component parts: host system 12, text-to-speech device 10, and lexicon server 46. Making the lexicon 16 part of an independent component, i.e., the lexicon server 46, allows the lexicon 16 to be shared across a network by many host systems 12 and supporting text to speech devices 10.

The lexicon server 46 includes a server interface 48 which couples with the host system 12 through the user lexicon interface line 20. Further, the server interface 48 couples with the TTS preprocessor 22 over look-up request and word look-up lines 42 and 44. A look-up processor 52, as described previously with respect to Figure 4, and a user lexicon interface 50 serve to couple the lexicon 16 to the server interface 48.

This embodiment allows the lexicon server to be a part of a local area network. However, additional management and control functions are necessary to implement the user lexicon interface 50.

**Claims**

1. A text-to-speech system, comprising:
   a) a host system operable to perform a text-to-speech application program, the host system including a memory;
   b) a lexicon stored in said memory;
   c) a text-to-speech device separate from and coupled to the host system.

2. A text-to-speech system according to claim 1 wherein the host system further includes a text-to-speech preprocessor coupled to the memory, said preprocessor preprocessing raw text provided by the application program and performing word lookups in the lexicon, said preprocessor further providing prepared text to said textto-speech device.

3. A text-to-speech system according to claim 2 wherein the text-to-speech device includes a text-to-speech processor that receives the prepared text and produces phonetic control information.

4. A text-to-speech system according to claim 3 wherein the text-to-speech device further includes a voice synthesizer that receives the phonetic control information from the text-to-speech processo.r and produces synthesized voice.

5. A text-to-speech system according to claim 1 wherein the host system further includes a look-up processor, coupled to the lexicon, that performs word lookups for the text-to-speech device.

6. A text-to-speech system according to claim 5 wherein the look-up processor further performs maintenance functions for the text-to-speech application program.

7. A text-to-speech system according to claim 6 wherein the text-to-speech device includes:

a text-to-speech preprocessor coupled to the host system, said preprocessor preprocessing raw text provided by the application program into prepared text and sending word lookup requests to said look-up processor in the host system, the lookup processor processing the word look-up requests and returning a result to the preprocessor.

8. A text-to-speech system according to claim 7 wherein the text-to-speech device further includes

a text-to-speech processor that receives the prepared text and produces phonetic control information; and a voice synthesizer that receives the phonetic control information from the text-to-speech processor and produces synthesized voice.

9. A communication network, comprising:

a bus;

a host system operable to perform a text-to-speech application program;

a text-to-speech device coupled to the host system;

a lexicon server separate from and coupled to the host system and text-to-speech device through the bus, the lexicon server including a lexicon and a lexicon server interface that interfaces the lexicon with the text-to-speech device and the host system coupled to the bus.

10. A network according to claim 9 wherein the lexicon server serves a plurality of host systems and text-to-speech devices.

11. A network according to claim 11 wherein the text-to-speech device includes:

a text-to-speech preprocessor that interfaces with the lexicon server over the bus and performs word lookups in the lexicon; the preprocessor providing prepared text as an output;

a text-to-speech processor coupled to the preprocessor that receives the prepared text from the preprocessor and provides phonetic control information as an output;

a voice synthesizer coupled to the text-to-speech processor that receives the phonetic control information and produces synthesized voice.

Prior Art Figure 1

Prior Art Figure 2

Figure 3

EP 0 429 057 A1

Figure 4

TTS=Text-To-Speech

Figure 5

TTS=Text-To-Speech

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | REVIEW OF THE ELECTRICAL COMMUNICATIONS LABORATORIES, vol. 36, no. 5, 1988, pages 451-457, Tokyo, JP; K. NAGAKURA et al.: "Japanese text-to-speech synthesizer" <br> * Pages 451-454, paragraphs 3,4; figures 1,4,5 * | 1-5,9-11 | G <br> 10 L 5/04 <br> G 06 F 3/16 |
| A | EP-A-0 216 129 (WANG) <br> * Page 2, line 3 - page 4, line 13; page 5, line 15 - page 6, line 12; pages 17-20, paragraph 3; pages 24-25, paragraph 5; figures 1,10; claims 1-3 * | 1-8 | |
| A | AT <br> & T TECHNICAL JOURNAL, vol. 65, no. 5, September-October 1986, pages 60-67, Short Hills, NJ, US; J.G. ACKENHUSEN et al.: "Speech processing for AT &T workstations" <br> * Pages 65-66: "Test to speech synthesis", "Future applications" * | 9-11 | |
| A | SPEECH TECHNOLOGY, vol. 2, no. 2, January-February 1984, pages 114-119, New York, US; "A new text-to-speech product produces dynamic human-quality voice" <br> * Pages 116-117 * | 1-5 | TECHNICAL FIELDS SEARCHED (Int. Cl.5) <br><br> G 10 L <br> G 06 F |
| A,D | ELECTRONICS INTERNATIONAL, vol. 56, no. 8, April 1983, pages 133-138, New York, US; E. BRUCKERT et al.: "Three-tiered software and VLSI aid developmental system to read text aloud" | | |
| A,D | WO-A-8 504 747 (FIRST BYTE) | | |
| A,D | US-A-3 704 345 (COKER) | | |

−/−

The present search report has been drawn up for all claims

| Place of search | Date of completion of search | Examiner |
|---|---|---|
| The Hague | 19 February 91 | FARASSOPOULOS A. |

**European Patent Office**

**EUROPEAN SEARCH REPORT**

Application Number

**EP 90 12 2169**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-4 278 838 (ANTONOV) | | |

TECHNICAL FIELDS SEARCHED (Int. Cl.5)

The present search report has been drawn up for all claims

| Place of search | Date of completion of search | Examiner |
|---|---|---|
| The Hague | 19 February 91 | FARASSOPOULOS A. |